# EUROPEAN PATENT APPLICATION

(11) **EP 2 166 464 A1**
(43) Date of publication of application: **24.03.2010**
(21) Application number: 09168537.0
(22) Date of filing: 25.08.2009
(51) Int. Cl.: G06F 17/30

(54) **Method, system, and apparatus for content search on a device**

(30) Priority: 12.09.2008 US 209337
(71) Applicant: Nokia Corporation, 02150 Espoo (FI)
(72) Inventor: Luoma, Kristian, FI-90810, Kiviniemi (FI); Partanen, Jussi-Pekka, FI-00350, Helsinki (FI); Punaganti Venkata, Murali Krishna, FI-02210, Espoo (FI); Kankainen, Mikko, FI-00250, Helsinki (FI)
(74) Representative: Tognetty, Virpi Maria

(57) **Abstract**

Content search on a device involves receiving a search request at a search engine of a device. The search request is associated with a search category. In response to the search request, a plug-in module of the search engine is selected based at least in part on a search category of the request. An extensible markup-language-formatted definition document is received from the plug-in module. The definition document includes an arrangement of data particular to the search category. A results document is formed based on the definition document and sent from the search engine to a search result renderer operating concurrently on the device with the search engine.

## Description

### FIELD OF THE INVENTION

This invention relates in general to computing devices, and more particularly to on-device search of content stored on user computing devices.

### BACKGROUND

Mobile computing devices are increasingly being adopted by mainstream users. The combination of portability, increased network availability, and increasing local storage capabilities may result in mobile devices becoming the primary data repository for more and more users. This use of mobile devices to carry the user's core data is a natural evolution of varied uses of previous generations of specialized devices. For example, cellular phones, media players, navigation devices, personal digital assistants (PDAs) and the like, were used to carry specialized data related to the device's primary function, e.g., contact data, music/video, maps and geographical data, notes, task lists, etc. Modem mobile devices may be capable of performing all of those functions on a single apparatus, and as a result the data related to those functions is also stored on the device.

Although multi-purpose mobile devices exist, these devices are often configured as a primary device (e.g., cellular phone, PDA) with other functions (e.g., media playback, navigation) added on. As a result, searching for and accessing data on multi-purpose mobile devices may be somewhat haphazard. For example, to search for a contact stored on a mobile device, the search capability and associated user interface may be embedded into a contacts manager program. To search for a song on the same device, a different program (e.g., media player) may be used for the search, and that different program that may operate differently when searching and providing results.

Although general-purpose content search is seen, for example, on personal computers, such search is typically filesystem-oriented. Such search may involve scanning individual files and returning filesystem data for files that meet the search criteria. However, data in a file-focused search that may be of interest to a filesystem (e.g., filename, location in file hierarchy) may not be of use in many types of searches. For example, media files may have filenames that make it difficult to determine the underlying content encoded in the file. In another example, a search for a contact name may result in providing a link to a single file where all the contacts are stored, but may not assist in reading the file and/or extracting the pertinent information related to the contact name. Further, under some situations a filesystem search result may display superfluous data (e.g., file creation date, date last modified, file ownership) that is only rarely of interest to the end user. Such inefficient display of results may be quite acceptable for a computer with a large display, but far less useful for a small device where display space is at a premium. As a result, a single search implementation that can flexibly tailor results is desirable. Such an implementation should be easily adaptable for ad-hoc extension of capabilities and display of results.

### SUMMARY

The present invention discloses a system, apparatus and method for content search on a device. In one example embodiment, a method involves searching a content repository of a user device in response to a search request received at the user device. The search request is associated with a search category. In response to the search request, a plug-in module of a search engine is selected based at least in part on the search category. An extensible markup-language-formatted definition document is received from the plug-in module. The definition document includes an arrangement of data particular to the search category. A results document is formed based on a result of the search and the definition document. The results document is sent to a search result renderer operating concurrently on the user device with the search engine.

In more particular embodiments, the plug-in module interfaces with the search engine via a plug-in interface that provides on-demand extension of search functionality of the search engine by the dynamic addition of multiple plug-in modules each associated with different search categories. In another configuration, the arrangement of data in the definition document includes at least one of layouts, structures, and actions particular to the search category handled by the selected plug-in. In such a case, the arrangement of data in the definition document includes the layouts, the structures, and the actions particular to the search category handled by the selected plug-in.

In other more particular embodiments, the search request includes one or more of a user-initiated request for a content search and a system event for initial population of a search database. In the latter case, the search database may include at least two results pools, and the results pools may each be directed to different search categories. In such a case, the method may further involve detecting a change in at least one of the result pools and signaling the change to the search result renderer to update search results rendered to the user.

In other more particular embodiments, the method may further involve downloading the plug-in module via a network in response to the search request. In another case, the method involves downloading the definition document via a network in response to at least one of the receiving of the search request and a non-user-initiated system event. In one configuration, the plug-in module searches the content repository in response to the search request.

In another example embodiment, an apparatus includes a) a data interface capable of accessing a content repository of a user terminal, b) a processor coupled to the data interface, and c) memory coupled to the processor. The memory includes instructions that cause the processor to search the content repository in response to a search request received at the user terminal. The search request is associated with a search category. The processor further selects, in response to the search request, a plug-in module based at least in part on the search category, and receives, from the plug-in module, an extensible markup language formatted definition document that includes an arrangement of data particular to the search category. The processor further forms a results document based on a result of the search and the definition document, and sends the results document to a search result renderer operating concurrently on the user terminal with the instructions.

In another example embodiment, a computer-readable storage medium has instructions which are executable by an apparatus for performing steps that include: a) searching a content repository of the apparatus in response to receiving a search request at the apparatus, the search request being associated with a search category; b) selecting, in response to the search request, a plug-in module of the search engine based at least in part on the search category; c) receiving, from the plug-in module, an extensible markup-language-formatted definition document that includes an arrangement of data particular to the search category; d) forming a results document based on a result of the search and the definition document; and e) sending the results document from the search engine to a search result renderer operating concurrently on the apparatus with the search engine.

In another example embodiment, an apparatus includes: a) means for searching a content repository of a user terminal in response to a search request received from the user terminal, the search request being associated with a search category; b) means for selecting, in response to the search request, a plug-in module of a search engine based at least in part on the search category; c) means for receiving, from the plug-in module in response to the plug-in module searching the content repository, an extensible markup language formatted definition document that includes an arrangement of data particular to the search category; d) means for forming a results document based on a result of the search and the definition document; and e) means for sending the results document from the search engine to a search result renderer of the user terminal.

These and various other advantages and features of novelty which characterize the invention are pointed out with particularity in the claims annexed hereto and form a part hereof. However, for a better understanding of the invention, its advantages, and the objects obtained by its use, reference should be made to the drawings which form a further part hereof, and to accompanying descriptive matter, in which there are illustrated and described representative examples of systems, apparatuses, and methods in accordance with the invention.

### BRIEF DESCRIPTION OF THE DRAWINGS

The invention is described in connection with the embodiments illustrated in the following diagrams.

FIG. 1 is a block diagram illustrating a high-level architecture according to an example embodiment of the invention;

FIG. 2 is a block diagram illustrating architectural details of a search engine according to an example embodiment of the invention;

FIG. 3 is a block diagram illustrating a user interface hierarchy according to an example embodiment of the invention;

FIG. 4 is a diagram illustrating a search user interface according to an example embodiment of the invention;

FIG. 5 is a block diagram of a mobile device according to an example embodiment of the invention; and

FIG. 6 is a flowchart illustrating a procedure according to an example embodiment of the invention.

### DETAILED DESCRIPTION OF EXAMPLE EMBODIMENTS OF THE INVENTION

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

In the following description of various exemplary embodiments, reference is made to the accompanying drawings that form a part hereof, and in which is shown by way of illustration various example embodiments in which the invention may be practiced. It is to be understood that other embodiments may be utilized, as structural and operational changes may be made without departing from the scope of the present invention.

Generally, the present disclosure describes methods, systems, and apparatus that enable a search user interface (UI) to be constructed and adapted with minimal effort. One commonly faced UI problem is the inability to change the search user interface content/categorization structure, look and feel, and/or functionality of a search software product without recompiling the source code. This can make it difficult to easily adapt products on-the-fly, e.g., applying dynamic updates via light-weight configuration files. Existing solutions lack the capability of controlling the actual search routine (from where the results are originating, how many, what kind, etc.) and further lack the ability to map actions to result types/layouts. The various embodiments described hereinbelow enable quick and easy configuring of a search product based on a machine-interpretable language of representation. Such representations allow flexible configuring of layouts, structures, and actions based on extensible data formats such as eXtensible Markup Language (XML).

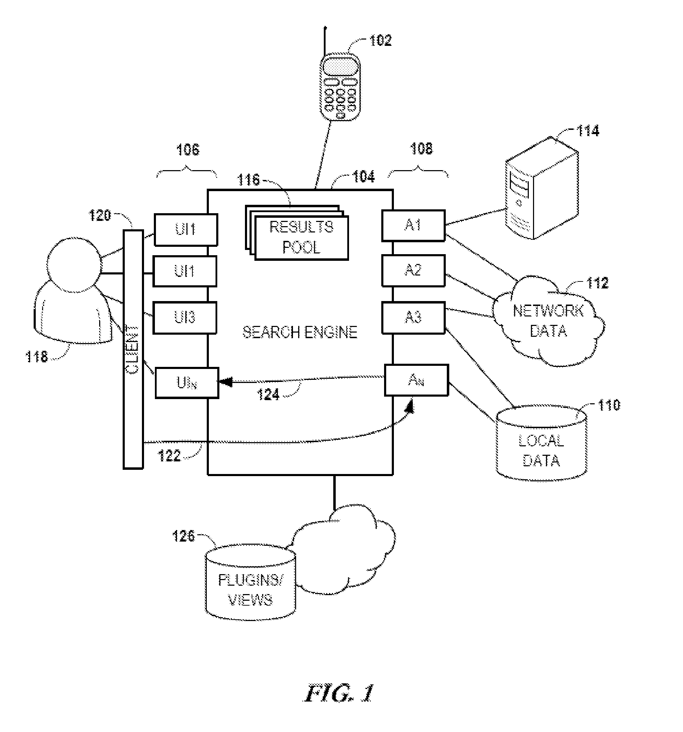

Software components according to embodiments of the invention are able to interpret a view and layout definitions language (VLDL) for representing the appropriate content structure and representation for a given search type and domain. In reference now to FIG. 1, a block diagram illustrates a high-level architecture according to an embodiment of the invention. A user device 102 (e.g., mobile computing apparatus) includes an extensible search engine 104. The search engine 104 includes a plug-in architecture as represented by data access plug-ins 108 and associated user interface (UI) views 106. The plug-ins 108 may include executable code that is capable of searching any combination of locally stored data 110, network data 112, and data of directly coupled devices/peripherals 114.

The search engine 104 can have any number of plug-ins 108, and the plug-ins 108 need not be visible outside the search engine 104. The search engine 104 may maintain internal results pools 116. There may be a separate pool 116 for each results category accessed by the plug-ins 108. The search engine 104 and result pool 116 may be implemented as an autonomous system so that once the search operation starts (and without explicit user input), the plug-ins 108 start searching and deliver results to search engine 104, which stores the results to correct result pool 116.

The results of searches are presented to a user 118 via the UI views 106. These views 106 may be presented directly to a user 118, and/or the results of searches may be delivered to one or more search client applications 120 that execute independently of the search engine 104. The UI views 106 may be implemented as executable code (e.g., plug-ins, portable data objects, etc.) that may be associated with particular ones of the search plug-ins 108. In other embodiments, the UI views may be defined by VLDL documents that may be interpreted locally or via search client(s) 120 that may be configured as renderers for results obtained via the search engine 104.. In the latter case, a search client 120 may use a result access interface (not shown) of the search engine 104 to get access to search results. The client 120 may implement a View Composer that uses the VLDL view definitions and result access to populate the list model in the UI.

Generally, the client 120 (or some other component) can send a search request 122 directed to the search engine 104 for a particular category of search. The category of the request may include parameters such as a data type, application type, intended use, etc., and may be accompanied by search parameters known in the art (e.g., text strings, media samples, etc.). For example, a search of a contacts database may be for multiple purposes, such as making a phone call, accessing a personal web page, finding photos of the contact, etc. As such, the search engine 104 may take into account a number of factors when deciding which plug-in 108 (or combination of plug-ins 108) should receive the request, and/or whether the request 122 can be fulfilled from the results pools 116.

In response to the request 122, the targeted plug-in(s) 108 will return a document 124 with the search results. The layouts, structure and actions of the response 124 will take into account the nature of the request 122 (e.g., parameters, the requesting client) and the particular actions handled by the responsible plug-in(s) 108. For example a search result of a contacts database for purposes of calling a contact may return a list of contact phone numbers which can automatically dial the contact when selected. A similar search of the contacts database, instead made for the purpose of sending a text message, may return a list of mobile phone numbers that will automatically prepare an instant message for editing upon selection. In this example, the format of the results may be the same, but the actions could be different. In another example, a search directed to a music depository may return different results and formats for different intended uses, such as finding music to play, finding excerpts to use as a ringtone, finding album cover art to use as desktop wallpaper, etc.

The plug-ins 108 and associated views/layouts 106 may be dynamically provided to the search engine 104 via a network service/repository 126. The plug-ins 108 and views 106 may be loaded automatically by the search engine 104 upon any event, such as addition of new applications, request for unsupported search category, updates of plug-ins or view, addition of new data repository, etc. Generally, the plug-ins 108 and associated views/layouts 106 are lightweight components that can extend the search engine 104 dynamically without require recompiling of source code of the operating system, utilities, services, and/or applications of the terminal 102. In some environments, these components 104, 106 may be updated manually or automatically using over-the-air (OTA) updating mechanisms. The views 106 may be updated independently of the search engine 104 and/or plug-ins. Other events may also cause these components 104, 106 to be added/updated, such as advertising.

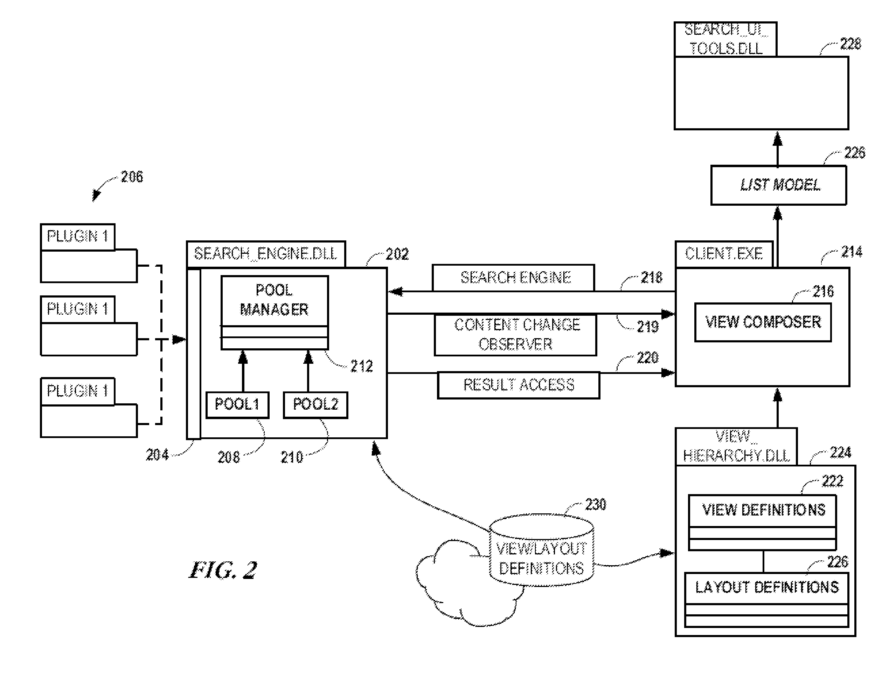

In reference now to FIG. 2, a block diagram illustrates additional details of a search engine architecture according to an embodiment of the invention. A main search engine component 202 includes an interface 204 that enables the addition of plug-ins 206. The search engine 202 can be extended with any number of plug-ins 206, and the plug-ins 206 need not be visible outside of the search engine 202. The search engine 202 may include multiple result pools (e.g., pools 208, 210) that are different for each category of results produced by plug-ins 206. A pool manager 212 may manage the different results pools 208, 210, by providing access to pool data and data/format definitions, maintaining associations between pools 208, 210 and one or more plug-ins 206, updating pools 208, 210, etc.

The search engine component 202 and associated plug-ins 206 may be configured as an autonomous system/process. For example, upon device start-up or some other system event, the search operation may start automatically. The plug-ins 206 may start searching and delivering results to search engine 202, which then stores the results to correct result pool 208, 210. This could be repeated at various intervals, using mechanisms that consume minimal resources to detect whether the search targets have changed. For example, if the target is some form of persistent storage (e.g., disk drive, flash memory) then system events such as changing of modification time stamps and/or status flags may be used to determine whether data has changed, added or deleted.

The search engine 202 may include its own interface for presenting search results and/or for setting configurations. In other arrangements, a separate client 214 may manage searches and/or view search results. The client 214 may be a standalone process/application, may be an extension to an existing program, and/or may be part of an application program interface (API) for an operating system, shell, or some other middleware component. In such a way, the functionality of the search engine 202 can be exposed to different programs for different search types, while still allowing the system to enforce common behaviors and appearances among different programs. Generally, the client 214 may be at least configured as a renderer for results obtained via the search engine 202.

The client 214 may initiate populating results pools 208, 210 and/or read from existing pools by way of a search engine method 218 (e.g., MSearchEngine API call). The client 214 uses a result access method/callback 220 to get access to search results. A content change observer method/callback 219 may also communicate search results to client 214, such as in the form of listing of differences to an existing search result. The result access 220 may be sent synchronously from the perspective of the client 214, e.g., in response to a user request. The content change observer 219 may communicate asynchronously from the perspective of the client 214, e.g., in response to a change detected by the search engine 202, another application and/or the operating system.

The client 214 includes a view composer 216 to correctly display the results, such as may be defined by particular plug-in 206 and/or results pool 208, 210 that provide the requested result. In order to display the results correctly, the view composer 216 may access view definitions 222 that are part of a view hierarchy component 224. The results from the result access interface 220 are combined with the appropriate view definition 222 to populate a list model 226. The list model 226 is sent to a user interface component 228 for rendering to the user. The user interface 228 may be part of the client 214 or may be separate. For example, if the client 214 is a plug-in or extension of a user program, the user program can use the list model 226 to display the result in its own user interface 228.

A view definition document 222 uses XML to describe the logical structure of each view. Among other things, this document 222 defines the order of which the category items and result items will be shown. Items having different titles, categories, and/or results can have their own layout definitions 226 that describe, for example, the layouts and colors of the items. The layouts 226 are connected to View Definition elements with layout-attribute of the elements in View Definition XML. So, for example, a result with entry <heading label="Hello" layout="customHello"/> will search the Layout Definitions with "customHello" as layout name. Once the layout is found, it will be applied and heading-element gets created.

A view definition may be provided for each known category of search, and these definitions may be dynamically updated/obtained in response to the search or other event (e.g., advertisement). A default item layout may be provided for search results that do not have a predefined layout. The plug-ins 206 may produce results that require special custom layouts. For example, if a search for images includes visual search criteria (e.g., colors, face recognition input), then the results may include a representative image portion that allows the user to evaluate the relevance of the search result. In such a case, the results can include the extra information for the client 214 so that the client 214 can create right kind of layout for the result. The results can include a view/layout definition as part of the extra data, and/or may only need to provide an identifier and version of the desired view/layout. In such a case, the client application 214 checks if that view/layout definition 222, 226 is already available. If the needed definitions are not available via the view library 224, then it may be downloaded (e.g., via over-the-air download) from a network server 230. The result will appear into the user interface 228 as soon as the layout definition gets downloaded and parsed.

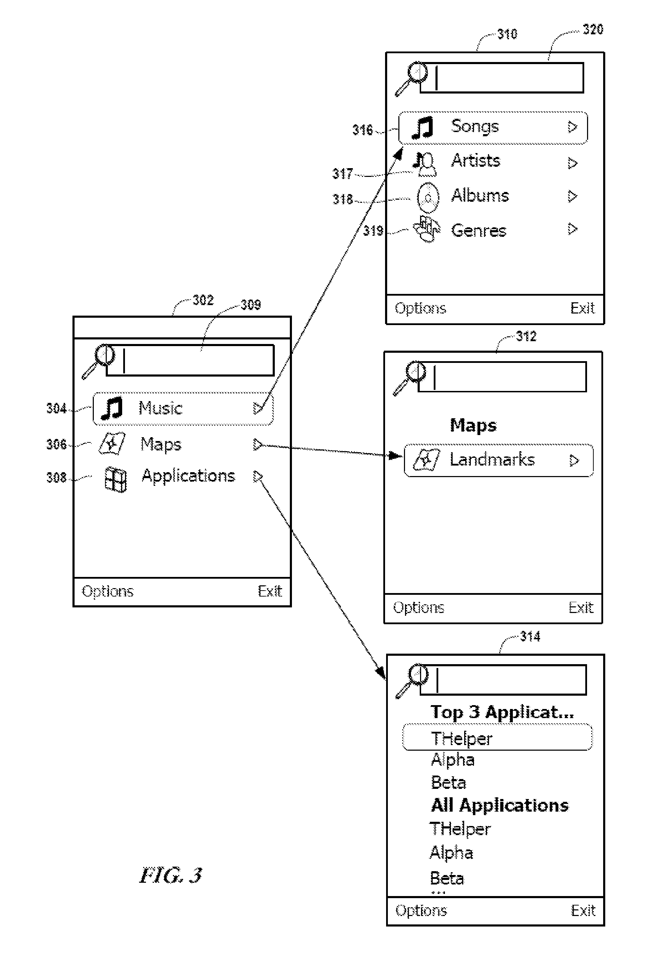

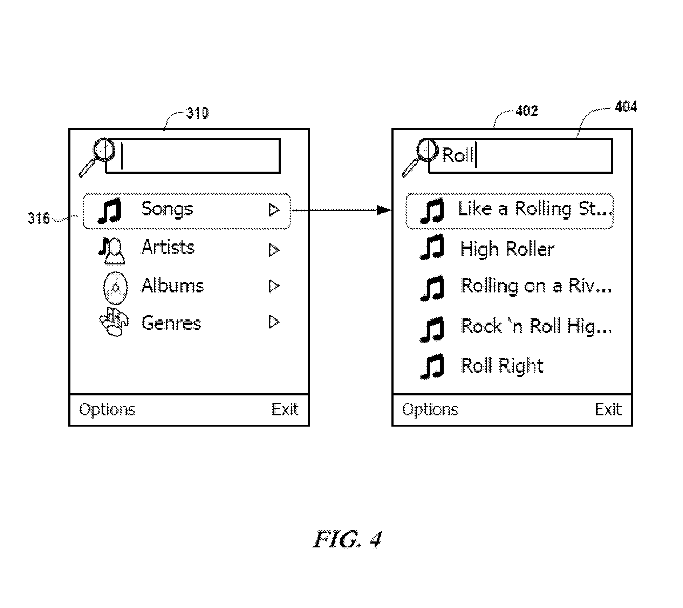

In reference now to FIGS. 3 and 4, block diagrams illustrate an example view hierarchy of a search user interface according to an embodiment of the invention. A root view 302 may be used as an entry point to any other views. This view 302 may be accessed, for example, by launching generic search engine client, which queries the search engine for current search categories which may reflect the current plug-ins used by the search engine. In this example, different search categories include music, maps, and applications as indicated by controls 304, 306, and 308. If a search query is entered in view 302 via entry box 309, then the query may be handled by different plug-ins and the results provided using a combination of different result views as dictated by the plug-ins.

Instead of initiating a search from view 302, the user may select one of the controls 304, 306, and 308, causing respective views 310, 312, and 314 to display. These views 310, 312, and 314 themselves may further refine the type/category of data searched for, and/or may further define queries that are sent to obtain a particular result type. For example, view 304 may be used to access music query results, where the query string may be directed to any one of song title, artist, album, and genre as represented by controls 316-319. If the query is entered in view 304, e.g., via text entry box 320, then the search may be applied to any of song title, artist, album, and genre fields associated with music metadata. In this case, the search result may be provided by the same plug-in (e.g., media search plug-in) but may be applied by the plug-in using different criteria (e.g., looking for search text in respective title, artist, album, and genre metadata of the media).

An example view definition XML code for views 302, 310, 312, and 314 of FIG. 3 is shown in Listing 1 below.

```
      <?xml version="1.0" encoding="utf-8"?>
      <viewDefinitions id="root" version="1">
             <!-- First we have the very root level of the view hierarchy. -->
             <view id="root" layout="defaultListLayout">
                     <category label="SYSTEM/@catMusic"
                                     open="MusicView"
                                     contextIcon="SYSTEM/@iconMusic"/>
                     <category label="SYSTEM/@catMaps"
                                     open="MapsView"
                                     contextIcon="SYSTEM/@iconMaps"/>
                     <category label="SYSTEM/@catApplications"
                                     open="ApplicationsView"
                                     contextIcon="SYSTEM/@iconApplications"/>
             </view>
             <!-- Music view definitions -->
             <view id="MusicView" layout="defaultListLayout">
                     <category label="SYSTEM/@catSongs"
                                     open="SongsView"
                                     contextIcon="SYSTEM/@iconSong"/>
                     <category label="SYSTEM/@catArtists"
                                     open="ArtistsView"
                                     contextIcon="SYSTEM/@iconArtist"/>
                     <category label="SYSTEM/@catAlbums"
                                     open="AlbumsView"
                                     contextIcon="SYSTEM/@iconMusicAlbum"/>
                     <category label="SYSTEM/@catGenres"
                                     open="GenresView"
                                     contextIcon="SYSTEM/iconGenre"/>
             </view>
             <view id="SongsView" layout="defaultListLayout">
                     <results from="songs" count="all"/>
             </view>
             <view id="ArtistsView" layout="defaultListLayout">
                     <results from="artists" count="all"/>
             </view>
             <view id="AlbumsView" layout="defaultListLayout">
                     <results from="albums" count="all"/>
             </view>
             <view id="GenresView" layout="defaultListLayout">
                     <results from="genres" count="all"/>
             </view>
             <!-- Maps view definitions -->
             <view id="MapsView" layout="defaultListLayout">
                     <genericItem label="'Maps'" layout="defaultHeadingLayout"/>
                     <category label="SYSTEM/@catLandmarks"
                                   open="LandmarksView"
                                     contextIcon="SYSTEM/@iconLandmark"/>
             </view>
             <!-- Aplications view definitions -->
             <view id="ApplicationsView" layout="defaultListLayout">
                     <genericItem label="'Top three applications'"
      layout="defaultHeadingLayout"/>
                     <results from="applications" count="3"/>
                     <genericItem label="'All applications'"
      layout="defaultHeadingLayout"/>
                     <results from="applications" startIndex="3" count="all"/>
             </view>
      </viewDefinitions>
      Copyright © 2008, Nokia Inc.
```

### Listing 1

In FIG. 4, a block diagram illustrates an additional search screen that may be presented in response to a selection of control 316 from screen 310 as shown in FIG. 3. In this example, a final view 402 of the searched data includes songs available from the target data stores. This list may be presented in full, or may be filtered by way of a text string, as shown in box 404. The filtering of the list may occur locally, such as the user interface client receiving all of the results in the selected category (e.g., music files displayed by song title). In other cases, the results received by the user interface client are filtered displayed results received from the search engine. For example, if the results in screen 402 are displayed without any search terms first being entered in screens 310, 402, a limited number of results (e.g., enough to fit in one screen) may be received from the search engine, and indices of the full list may be used to retrieve further results as needed (e.g., in response to scrolling events). The number of results delivered by the search engine may be limited even if the results are filtered by search text 404, e.g., where the number of filtered results cannot all be displayed in one screen.

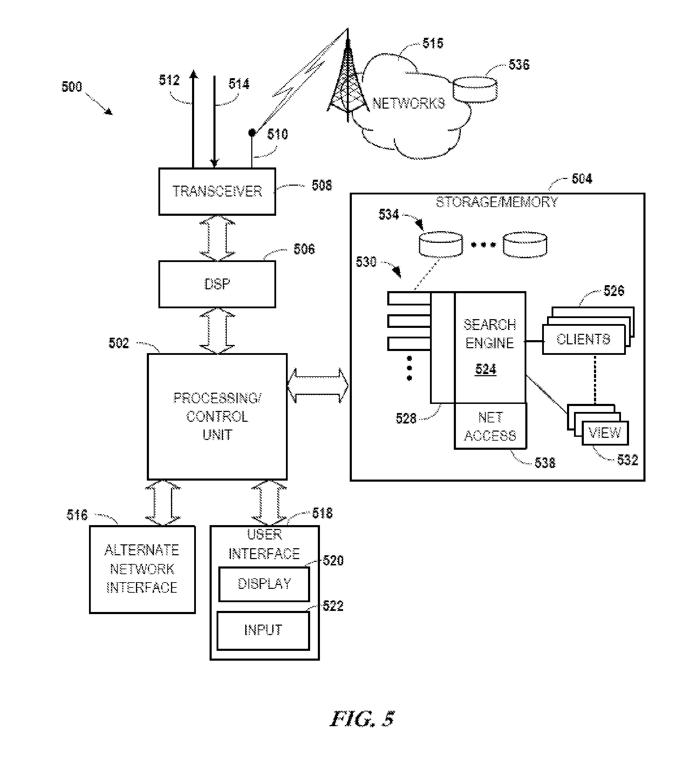

Many types of apparatuses may be used for search operations as described herein. Mobile telephony devices are particularly useful for personal search because such devices are increasingly becoming a primary repository for important personal information. In reference now to FIG. 5, an example is illustrated of a representative mobile computing arrangement 500 capable of carrying out operations in accordance with embodiments of the invention. Those skilled in the art will appreciate that the exemplary mobile computing arrangement 500 is merely representative of general functions that may be associated with such mobile devices, and also that landline computing systems similarly include computing circuitry to perform such operations.

The processing unit 502 controls the basic functions of the arrangement 500. Those functions associated may be included as instructions stored in a program storage/memory 504. In one embodiment of the invention, the program modules associated with the storage/memory 504 are stored in non-volatile electrically-erasable, programmable read-only memory (EEPROM), flash read-only memory (ROM), hard-drive, etc. so that the information is not lost upon power down of the mobile terminal. The relevant software for carrying out conventional mobile terminal operations and operations in accordance with the present invention may also be transmitted to the mobile computing arrangement 500 via data signals, such as being downloaded electronically via one or more networks, such as the Internet and an intermediate wireless network(s).

The mobile computing arrangement 500 may include hardware and software components coupled to the processing/control unit 502 for performing network data exchanges. The mobile computing arrangement 500 may include multiple network interfaces for maintaining any combination of wired or wireless data connections. In particular, the illustrated mobile computing arrangement 500 includes wireless data transmission circuitry for performing network data exchanges.

This wireless circuitry includes a digital signal processor (DSP) 506 employed to perform a variety of functions, including analog-to-digital (A/D) conversion, digital-to-analog (D/A) conversion, speech coding/decoding, encryption/decryption, error detection and correction, bit stream translation, filtering, etc. A transceiver 508, generally coupled to an antenna 510, transmits the outgoing radio signals 512 and receives the incoming radio signals 514 associated with the wireless device. These components may enable the arrangement 500 to join in one or more networks 515, including mobile service provider networks, local networks, and public networks such as the Internet.

The mobile computing arrangement 500 may also include an alternate network/data interface 516 coupled to the processing/control unit 502. The alternate network/data interface 516 may include the ability to communicate via secondary data paths using any manner of data transmission medium, including wired and wireless mediums. Examples of alternate network/data interfaces 516 include USB, Bluetooth, Ethernet, 802.11 Wi-Fi, IRDA, Ultra Wide Band, WiBree, etc. These alternate interfaces 516 may also be capable of communicating via the networks 515, or via direct peer-to-peer communications links.

The processor 502 is also coupled to user-interface elements 518 associated with the mobile terminal. The user-interface 518 of the mobile terminal may include, for example, a display 520 such as a liquid crystal display and a transducer 522. The transducer 522 may include any sensing device capable of producing media, such as any combination of text, still pictures, video, sound, etc. Other user-interface mechanisms may be included in the interface 518, such as keypads, speakers, microphones, voice commands, switches, touch pad/screen, graphical user interface using a pointing device, trackball, joystick, vibration generators, etc. These and other user-interface components are coupled to the processor 502 as is known in the art.

The program storage/memory 504 typically includes operating systems for carrying out functions and applications associated with functions on the mobile computing arrangement 500. The program storage 504 may include one or more of read-only memory (ROM), flash ROM, programmable and/or erasable ROM, random access memory (RAM), subscriber interface module (SIM), wireless interface module (WIM), smart card, hard drive, or other removable memory device. The storage/memory 504 of the mobile computing arrangement 500 may also include software modules for performing functions according to embodiments of the present invention.

The program storage/memory 504 includes a search engine component 524 that is configured to receive queries from and/or provide search results to a plurality of clients 526. The clients 526 are generally user programs capable of interacting via the user interface 518. The clients 526 may be particular to search, and/or may include other types of applications, such as telephony, messaging, video, media playback, navigation, productivity, contacts, calendaring, content creation, etc. The search engine 524 includes a plug-in interface 528 that is capable of extending the search engine functionality by modifying executable functions of the search engine 524 by accepting and executing dynamically added plug-ins 530. The plug-ins 530 may extend functionality by, among other things, defining/extending: data types and domains of search targets; query attributes; views and actions of search results; automatic search behaviors; etc.

The search engine 524 may utilize a generic view definition architecture that enables flexible definition of views by the use of view definition documents 532. The view definition documents 532 may include XML-formatted documents that allow flexible rendering of search access, query, and results UIs. The use and availability of the view definition documents 532 may be governed by plug-ins 530. Similarly, the search engine 524 may be extended by the plug-ins 530 to access various search domains, including local/attached storage repositories 534, and remote depositories, including network repositories 536 accessible via a network access interface 538.

The mobile computing arrangement 500 of FIG. 5 is provided as a representative example of a computing environment in which the principles of the present invention may be applied. From the description provided herein, those skilled in the art will appreciate that the present invention is equally applicable in a variety of other currently known and future mobile and landline computing environments. For example, desktop computing devices similarly include a processor, memory, a user interface, and data communication circuitry. Thus, the present invention is applicable in any known computing structure where data may be communicated via a network.

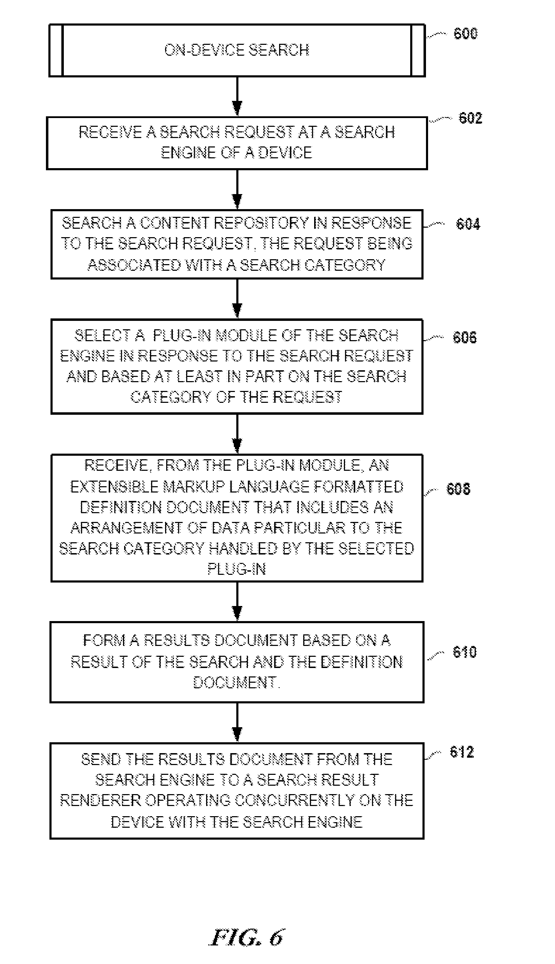

In reference now to FIG. 6, a flowchart illustrates a procedure 600 according to one embodiment of the invention. Although the procedure 600 is applicable to on-device search, the procedure may also be applicable to off-device and hybrid searching. Generally, a search request is received 602 at search engine a device. The request may originate from a client user interface, and be communicated to the search engine via interprocess communications and the like. A content repository is searched 604 in response to the search request (e.g., via the search engine and/or plug-in). The search engine selects 606 a plug-in module of the search engine to fulfill the search request. The plug-in module is selected 606 in response to a search category of the request. The plug-in module may, for example, interface with the search engine via a plug-in interface that provides on-demand extension of search functionality of the search engine by the dynamic addition of multiple plug-in modules.

The search engine receives 608 an extensible markup language formatted definition document from the plug-in module in response to the search 604. The definition document describes an arrangement of data (e.g., layouts, structures, actions) particular to the search category handled by the selected plug-in. A results document is formed 610 based on the search results and the definition document, and the results document is sent 612 from the search engine to a search result renderer operating concurrently on the device with the search engine to cause rendering of the results to a user.

The foregoing description of the exemplary embodiments of the invention has been presented for the purposes of illustration and description. It is not intended to be exhaustive or to limit the invention to the precise form disclosed. Many modifications and variations are possible in light of the above teaching. It is intended that the scope of the invention be limited not with this detailed description, but rather determined by the claims appended hereto.

## Claims

1. A method, comprising:
searching a content repository of a user device in response to a search request received at the user device, the search request being associated with a search category;
selecting, in response to the search request, a plug-in module of a search engine based at least in part on the search category;
receiving, from the plug-in module, an extensible markup-language-formatted definition document that includes an arrangement of data particular to the search category;
forming a results document based on a result of the search and the definition document; and
sending the results document to a search result renderer operating concurrently on the user device with the search engine.

2. The method of Claim 1, wherein the plug-in module interfaces with the search engine via a plug-in interface that provides on-demand extension of search functionality of the search engine by the dynamic addition of multiple plug-in modules each associated with different search categories.

3. The method of Claim 1, wherein the arrangement of data in the definition document comprises at least one of layouts, structures, and actions particular to the search category handled by the selected plug-in.

4. The method of Claim 3, wherein the arrangement of data in the definition document comprises the layouts, the structures, and the actions particular to the search category handled by the selected plug-in.

5. The method of Claim 1, wherein the search request comprises a user-initiated request for a content search.

6. The method of Claim 1, wherein the search request comprises a system event for initial population of a search database.

7. The method of Claim 6, wherein the search database comprises at least two results pools, wherein the results pools are each directed to different search categories.

8. The method of Claim 7, further comprising:
detecting a change in at least one of the result pools; and
signaling the change to the search result renderer to update search results rendered to the user.

9. The method of Claim 1, further comprising downloading the plug-in module via a network in response to the search request.

10. The method of Claim 1, further comprising downloading the definition document via a network in response to at least one of the receiving of the search request and a non-user-initiated system event.

11. The method of Claim 1, wherein the plug-in module searches the content repository in response to the search request.

12. An apparatus comprising:
a data interface capable of accessing a content repository of a user terminal;
a processor coupled to the data interface; and
memory coupled to the processor, wherein the memory is configured to store instructions that cause the processor to,
search the content repository in response to a search request received at the user terminal, the search request being associated with a search category;
select, in response to the search request, a plug-in module based at least in part on the search category;
receive, from the plug-in module, an extensible markup language formatted definition document that includes an arrangement of data particular to the search category;
form a results document based on a result of the search and the definition document; and
send the results document to a search result renderer operating concurrently on the user terminal with the instructions.

13. An apparatus as claimed in claim 12 wherein the instructions cause the apparatus to perform the method of any claims 1 to 11.

14. A computer-program comprising:
instructions which are executable by an apparatus for performing:
searching a content repository of the apparatus in response to receiving a search request at the apparatus, the search request being associated with a search category;
selecting, in response to the search request, a plug-in module of the search engine based at least in part on the search category;
receiving, from the plug-in module, an extensible markup-language-formatted definition document that includes an arrangement of data particular to the search category;
forming a results document based on a result of the search and the definition document; and
sending the results document from the search engine to a search result renderer operating concurrently on the apparatus with the search engine.

15. A computer program comprising instructions for causing an apparatus to perform the method of any of claims 1 to 11.
